# EUROPEAN PATENT SPECIFICATION

(11) **EP 4 078 521 B1**
(45) Date of publication and mention of the grant of the patent: **02.04.2025**
(21) Application number: 20804578.1
(22) Date of filing: 17.11.2020
(51) Int. Cl.: G06T 7/73

(54) **A CAMERA SYSTEM FOR A MOBILE DEVICE, A METHOD FOR LOCALIZING A CAMERA AND A METHOD FOR LOCALIZING MULTIPLE CAMERAS**
KAMERASYSTEM FÜR EINE MOBILE VORRICHTUNG, VERFAHREN ZUM LOKALISIEREN EINER KAMERA UND VERFAHREN ZUM LOKALISIEREN MEHRERER KAMERAS
SYSTÈME DE CAMÉRA POUR UN DISPOSITIF MOBILE, PROCÉDÉ DE LOCALISATION D'UNE CAMÉRA ET PROCÉDÉ DE LOCALISATION D'UNE PLURALITÉ DE CAMÉRAS

(30) Priority: 19.12.2019 EP 19218285
(43) Date of publication of application: 26.10.2022
(73) Proprietor: Sony Semiconductor Solutions Corporation, Atsugi-shi Kanagawa 243-0014 (JP); Sony Europe B.V., Weybridge, Surrey KT13 0XW (GB)
(72) Inventor: KOEHLE, Roderick, 70327 Stuttgart (DE); MICHIELIN, Francesco, 70327 Stuttgart (DE)
(74) Representative: 2SPL Patentanwälte PartG mbB
(86) International application number: PCT/EP2020/082448
(87) International publication number: WO 2021/121836

(56) References cited:
- US-A1- 2012 140 073
- ZUNJIE ZHU ET AL: "Real-time Indoor Scene Reconstruction with RGBD and Inertia Input", ARXIV.ORG, CORNELL UNIVERSITY LIBRARY, 201 OLIN LIBRARY CORNELL UNIVERSITY ITHACA, NY 14853, 7 December 2018 (2018-12-07), XP080990340
- IGNACIO PARRA ALONSO ET AL: "Accurate Global Localization Using Visual Odometry and Digital Maps on Urban Environments", IEEE TRANSACTIONS ON INTELLIGENT TRANSPORTATION SYSTEMS, IEEE, PISCATAWAY, NJ, USA, vol. 13, no. 4, 1 December 2012 (2012-12-01), pages 1535 - 1545, XP011474074, ISSN: 1524-9050, DOI: 10.1109/TITS.2012.2193569
- CHANG-RYEOL LEE ET AL: "Gyroscope-aided Relative Pose Estimation for Rolling Shutter Cameras", ARXIV.ORG, CORNELL UNIVERSITY LIBRARY, 201 OLIN LIBRARY CORNELL UNIVERSITY ITHACA, NY 14853, 15 April 2019 (2019-04-15), XP081169125
- FRIEDRICH FRAUNDORFER ET AL: "A Minimal Case Solution to the Calibrated Relative Pose Problem for the Case of Two Known Orientation Angles", 5 September 2010, ADVANCES IN INTELLIGENT DATA ANALYSIS XIX; [LECTURE NOTES IN COMPUTER SCIENCE; LECT.NOTES COMPUTER], SPRINGER INTERNATIONAL PUBLISHING, CHAM, PAGE(S) 269 - 282, ISBN: 978-3-030-71592-2, ISSN: 0302-9743, XP019150742

## Description

### Field

Embodiments of the present disclosure relate to a camera system for a mobile device, a method for localizing a camera and a method for localizing multiple cameras of a camera system.

### Background

In the automotive sector, vision based driver assistance systems (ADAS) are emerging for various applications such as parking assistance, sideline warnings and collision detection. For parking assistance surround view, for example, four cameras can be used to provide a 360 degree view of an environment of a vehicle. For collision and sideline detection stereo cameras can be used which are configured to estimate distances and speed of objects in the environment.

For driving autonomy, the vehicle can be enabled to estimate its own path of driving and recognize its three-dimensional (3D) environment while driving. For this, applications may need to provide an appropriate spatial accuracy. Therefore, for example, cameras need to be calibrated and rigidly mounted such that the 3D environment can be estimated from a relative position and orientation of the cameras. In case of stereo view, a pre-calibration can be done in a factory or workshop.

A distance between the cameras is limited to a maximum distance as the rigidly mounted cameras may experience calibration issues due to torsion, vibrations or relative motion of the cameras. Thus, mounting the cameras rigidly to a chassis of the vehicle can be inappropriate for autonomous driving applications as motor vibrations and chassis torsion may affect the distance and orientation of cameras.

ZUNJIE ZHU ET AL: "Real-time Indoor Scene Reconstruction with RGBD and Inertia Input" propose an end-to-end 3D reconstruction system which combines color, depth and inertial measurements to achieve robust reconstruction with fast sensor motions. IGNACIO PARRA ALONSO ET AL: "Accurate Global Localization Using Visual Odometry and Digital Maps on Urban Environments" describe a full solution to the estimation of the global position of a vehicle in a digital road map by means of visual information alone. The solution is based on a stereo platform used to estimate the motion trajectory of the ego vehicle and a map-matching algorithm, which will correct the cumulative errors of the vision-based motion information and estimate the global position of the vehicle in a digital road map. CHANG-RYEOL LEE ET AL: "Gyroscope-aided Relative Pose Estimation for Rolling Shutter Cameras" propose exploiting gyroscope measurements, angular velocity, along with image measurement to compute the relative pose between rolling shutter cameras. FRIE-DRICH FRAUNDORFER ET AL: "A Minimal Case Solution to the Calibrated Relative Pose Problem for the Case of Two Known Orientation Angles" present a minimal case solution to the calibrated relative pose problem using 3 point correspondences for the case of two known orientation angles. This case is relevant when a camera is coupled with an inertial measurement unit (IMU). US 2012/140073 A1 describes an in-vehicle apparatus including an image-capturing part that is installed on a vehicle and captures an image of a periphery of the vehicle. An image generator generates a bird's-eye image including the vehicle and the periphery of the vehicle viewed from a virtual viewpoint based on the image captured by the image-capturing part. A transmitter transmits the bird's-eye image to a terminal. The image generator changes the virtual viewpoint based on a change request from the terminal and generates the bird's-eye image viewed from the virtual viewpoint after changing the virtual viewpoint.

Hence, there may be a demand for an improved concept to determine a pose of a camera.

### Summary

This demand can be satisfied by camera systems and methods in accordance with the appended independent and dependent claims.

According to a first aspect not part of the invention defined in the claims, the present disclosure relates to a camera system for a mobile device. The camera system comprises at least one camera which is freely mounted to the mobile device. Further, the camera system comprises at least one motion measurement unit configured to provide motion data of the camera and a data processing circuitry configured to determine a pose of the camera from the motion data.

The mobile device is, for example, a vehicle (e.g. a car, a truck, a bus, a boat, a plane, a motorcycle, a bicycle or an unmanned aerial vehicle) or a handheld device.

The camera can be freely mounted to the mobile device using a damping plate or a (camera) stabilizer to at least partly reduce, compensate or absorb torsion and/or vibrations which may emanate from the mobile device.

The stabilizer, for example, comprises a pivoted support (e.g. a gimbal) which allows a rotation of the camera about at least one axis to mount the camera to the mobile device in a floating position.

The damping plate can be at least partially made of an elastic material to mount the camera freely (elastically) to the mobile device.

Thus, the camera may be considered as loosely coupled or freely or floating mounted to the mobile device.

The camera can be a video/movie camera.

The motion data, for example, is indicative of an acceleration and/or an angular velocity of the camera. The angular velocity and/or the acceleration for example can be measured by a gyroscope comprised of the motion measurement unit.

Since the camera is freely mounted to the mobile device, the camera may change its pose. The pose can be understood as a relative position and/or orientation within an environment to the mobile device.

The camera, for example, can be subjected to the angular velocity while the mobile device is moving. The data processing unit can determine the pose of the camera, for example, from a relationship between an angular velocity and the pose of the camera.

This may enable a so-called auto-calibration of the camera system with regard to the pose of the camera, making a pre-calibration or a re-calibration (e.g. at a factory or a workshop) of the camera system obsolete.

According to a second aspect not part of the invention defined in the claims, the present disclosure relates to a method for localizing a camera of a camera system for a mobile device. The method comprises providing motion data of the camera, which is freely mounted to the mobile device, using at least one motion measurement unit. The method further comprises determining a pose of the camera from the motion data.

The method, for example, can be executed using the aforementioned camera system. According to a third aspect, the present disclosure relates to a camera system comprising a first camera configured to provide a first sequence of images of an environment; a first motion measurement unit configured to provide first motion data of the first camera;at least one second camera configured to provide a second sequence of images of the environment; a second motion measurement unit configured to provide second motion data of the second camera; and a data processing circuitry configured to determine a relative pose of the first camera and the second camera towards each other from a correlation between the first motion data and the second motion data, determine a position of a target within the environment from a correlation between the first sequence of images and the first motion data; register the position of the target in a digital map of the environment; and detect the target within the second sequence of images using the digital map, the motion data, and the relative pose of the first and the second camera towards each other.

The first and the second camera can be a video/movie camera.

The first and the second motion data, for example, are indicative of an acceleration and/or an angular velocity of the first and the second camera, respectively. The first and the second motion measurement unit, for example, each comprise a gyroscope for measuring the angular velocity or the acceleration acting on the first and the second camera, respectively.

Due to a different pose of the first and the second camera, the first and the second motion data may be different from each other. Further, the first and the second motion data can correlate in such a way that, for example, a distinct difference between the first and the second motion data is indicative of a distinct relative pose to each other.

This may enable an auto-calibration of the camera system to adapt the camera system, for example, to a varying relative pose of the first and the second camera towards each other.

The relative pose, for example, rapidly changes due to vibrations acting on the first and/or the second camera. Alternatively and/or additionally the relative pose may change due to linear thermal expansion with a variation of an ambient temperature.

The auto-calibration may ensure an appropriate spatial accuracy of the camera system which may be required for applications in connection with autonomous driving vehicles.

According to a fourth aspect, the present disclosure relates to a method, comprising providing a first sequence of images of an environment with a first camera; providing first motion data of the first camera; providing a second sequence of images of the environment with a second camera; providing second motion data of the second camera; and determining a relative pose of the first camera and the second camera towards each other from a correlation between the first motion data, the second motion data the first sequence of images, and the second sequence of images, determining a position of a target within the environment from a correlation between the first sequence of images and the first motion data; registering the position of the target in a digital map of the environment; and detecting the target within the second sequence of images using the digital map, the motion data and the relative pose of the first and the second camera.

This method, for example, can be executed using the aforementioned camera system comprising the first and the second camera.

According to a fifth aspect, the present disclosure relates to a computer program comprising instructions which, when executed by at least one processor, causes the processor to perform the method of the fourth aspect.

According to a sixth aspect, the present disclosure relates to a mobile device which comprises the system of the third aspect.

The mobile device can be a vehicle or a handheld device. In particular, the mobile device can be an autonomously driving vehicle.

According to a seventh aspect not part of the invention defined in the claims, the present disclosure relates to a distributed camera system comprising a first camera configured to provide a first sequence of images of an environment a first motion measurement unit configured to provide first motion data of the first camera and a first data processing circuitry. The first data processing circuitry is configured to determine a position of target within the environment from a correlation between the first motion data and the first sequence of images register the position of the target in a digital map of the environment. Further, the first data processing circuitry is configured to provide the digital map of the environment.

The distributed camera system further comprises at least one second camera configured to provide a second sequence of images of an environment, a second motion measurement unit configured to provide second motion data of the second camera and a second data processing circuitry. The second data processing circuitry is configured to determine a relative pose of the first camera and the second camera towards each other from a correlation between the first motion data and the second motion data. The second data processing circuitry is further configured to receive the digital map of the environment and detect the target within at least one of the images of the second sequence of images based on and the digital map and the relative pose of the first camera and the second camera towards each other.

The distributed camera system can be understood as an apparatus with multiple camera system each comprising a camera, a motion measurement unit and a data processing circuitry.

**In** some embodiments, the first camera, the first motion measurement unit and the first data processing circuitry may be mounted to a first mobile device and the second camera, the second motion measurement unit and the second data processing circuitry may be mounted to a second mobile device.

**In** some applications it may be desired to track the target with multiple cameras. Thus, it can be useful to identify the target within the second sequence of images.

For this, the digital map can be shared within the first and the second data processing circuitry. The second data processing circuitry thus can estimate a position of the target within one or more images of the second sequence of images by reference to the digital map and the relative pose of the first and the second camera.

The skilled person having benefit from the present disclosure will appreciate that this may be desired for tracking purposes in some applications in which the first and the second camera have different and/or opposite fields of view.

### Brief description of the Figures

Some examples of apparatuses and/or methods will be described in the following by way of example only, and with reference to the accompanying figures, in which
- Fig. 1: shows a schematic example of a camera system for a mobile device;
- Fig. 2: illustrates tracking a target using the camera system;
- Fig. 3: illustrates a motion path of the mobile device and a 3-dimensional map for a characterization of an environment of the mobile device;
- Fig. 4: illustrates a characterization of the environment using the 3-dimensional map;
- Fig. 5: shows a schematic example of a camera system comprising a first and a second camera;
- Fig. 6: shows a schematic example of the camera system comprising the first and the second camera mounted to a mobile device;
- Fig. 7: shows a flow chart schematically illustrating a method for localizing a camera; and
- Fig. 8: shows a flow chart schematically illustrating a method for localizing multiple cameras.

### Detailed Description

Various examples will now be described more fully with reference to the accompanying drawings in which some examples are illustrated. In the figures, the thicknesses of lines, layers and/or regions may be exaggerated for clarity.

Accordingly, while further examples are capable of various modifications and alternative forms, some particular examples thereof are shown in the figures and will subsequently be described in detail. However, this detailed description does not limit further examples to the particular forms described. Same or like numbers refer to like or similar elements throughout the description of the figures, which may be implemented identically or in modified form when compared to one another while providing for the same or a similar functionality.

It will be understood that when an element is referred to as being "connected" or "coupled" to another element, the elements may be directly connected or coupled via one or more intervening elements. If two elements A and B are combined using an "or", this is to be understood to disclose all possible combinations, i.e. only A, only B as well as A and B, if not explicitly or implicitly defined otherwise. An alternative wording for the same combinations is "at least one of A and B" or "A and/or B". The same applies, mutatis mutandis, for combinations of more than two Elements.

The terminology used herein for the purpose of describing particular examples is not intended to be limiting for further examples. Whenever a singular form such as "a," "an" and "the" is used and using only a single element is neither explicitly or implicitly defined as being mandatory, further examples may also use plural elements to implement the same functionality. Likewise, when a functionality is subsequently described as being implemented using multiple elements, further examples may implement the same functionality using a single element or processing entity. It will be further understood that the terms "comprises," "comprising," "includes" and/or "including," when used, specify the presence of the stated features, integers, steps, operations, processes, acts, elements and/or components, but do not preclude the presence or addition of one or more other features, integers, steps, operations, processes, acts, elements, components and/or any group thereof.

Unless otherwise defined, all terms (including technical and scientific terms) are used herein in their ordinary meaning of the art to which the examples belong.

For purposes of autonomous driving, one or more cameras can be utilized to characterize an environment of a vehicle. For this, camera systems can be pre-calibrated to a pose of the cameras. Since those can be mounted to the vehicle, the cameras may be subjected to torsion and/or vibrations which may lead to calibration issues and in some cases to such a characterization of the environment which is inappropriate for autonomous driving purposes.

Hence, there may be a demand for an improved concept for determining a pose of a camera.

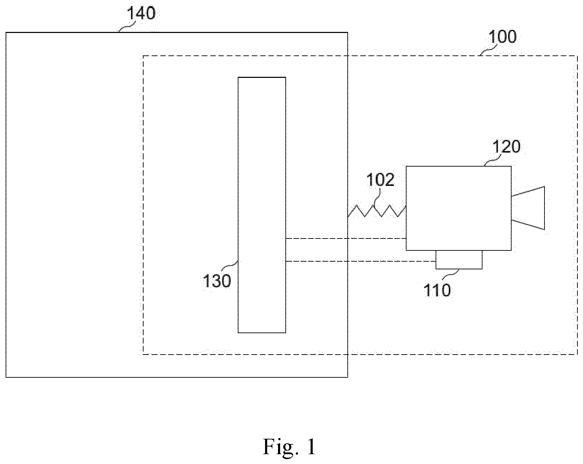

Fig. 1 shows a schematic example of a camera system 100 which is not part of the invention defined in the claims. The camera system 100 comprises a camera 120 and a motion measurement unit 110 configured to provide motion data of the camera 120. Further, the camera system 100 comprises a data processing circuitry 130 configured to determine a pose of the camera 120 from the motion data.

The camera 100 is freely mounted to a mobile device 140. As can be seen in Fig. 1, the camera 100 can be freely mounted to the mobile device 140 by a stabilizing mounting 102 for a floating mounting.

The stabilizing mounting 102 can at least partly absorb vibrations coming from the mobile device 140. For example, the stabilizing mounting 102 comprises a camera stabilizer (e.g. a gimbal) and/or an elastic mounting, such as a damping plate.

The motion measurement unit 110 can comprise an inertial measurement unit (IMU) which is rigidly mounted to the camera 120. The skilled person having benefit from the present disclosure will appreciate that the IMU can provide a portion of the motion data using a combination of one or more accelerometers, gyroscopes, and/or magnetometers. The motion data from the IMU, thus, may be indicative of an acceleration and/or an angular velocity of the camera 120.

Alternatively or additionally, the motion measurement unit 110 can comprise a global positioning system (GPS) sensor which is installed at the mobile device 140 and configured to provide at least a portion of the motion data. The GPS sensor can provide a geographical position, a velocity of the mobile device 140 or a course of the geographical position which may contribute to the motion data.

The motion measurement unit 110 may comprise both the IMU and the GPS sensor for a higher operational reliability than each of the IMU and the GPS sensor.

The motion measurement unit 110 is coupled to the data processing circuitry 130 to communicate the motion data.

Due to a relationship between the pose of the camera 120 and the motion data, the data processing circuitry 130 can determine the pose of the camera 120.

For example, the camera 120 can be displaced from a predefined position by an angular velocity. A displacement of the camera 120 from the predefined position may depend on an orientation and an absolute value of the angular velocity. The data processing circuitry 130, for example, is calibrated to determine the displacement and the pose of the camera 120 from the angular velocity included in the motion data.

This may enable an auto-calibration of the camera system 100 based on the pose of the camera 120 on the mobile device 130 to recover a spatial accuracy of a characterization of the environment using the camera system 100.

**In** case of automotive applications, the mobile device 140 can be a vehicle. **In** particular, the mobile device 140 can be an autonomously driving vehicle functioning based on a characterization of the environment using the camera system 100.

For example, the autonomously driving vehicle may move on public roads, take evasive maneuvers or output a warning based on the characterization of the environment.

To improve an accuracy of the auto-calibration, the data processing circuitry 130 can further involve visual data for determining the pose of the camera 120. For this, the camera 120 can be a video/movie camera which records a sequence of images of the environment.

To characterize its pose within the environment, the camera 120 can provide a sequence of images of the environment to the processing circuitry 130. This, for example enables the data processing circuitry 130 to determine the pose from a correlation between the sequence of images and the motion data, as stated in more detail below.

For a communication of the sequence of images, the camera 120 is coupled with the data processing circuitry 130.

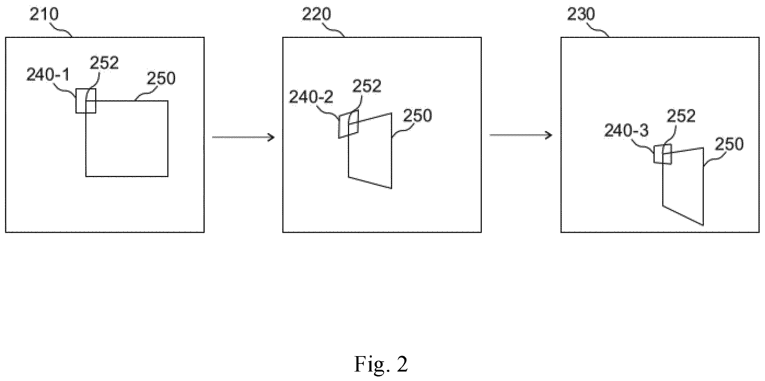

As can be seen in Fig. 2, the camera 120, for example, provides a sequence of subsequent images of the environment. To simplify matters, a following description of a localization of the camera 120 refers to a first image 210, a second image 220 and a third image 230 of the sequence of images. In general, the sequence of images can comprise more images and the concept described below can also be applied to more images.

Each of the images 210, 220 and 230 includes an object 250 of the environment. Without limitation of generality and to simplify matters, the localization of the camera 120 is described by reference to the object 250, whereas in further use cases the localization of the camera 120 may involve multiple objects.

A basic idea of the localization of the camera 120 is that the data processing circuitry 130 determines a change of perspective of the camera 120 by comparing the first image 210 of the sequence of images with the second image 220.

The (absolute) pose of the camera 120 towards the object 250 can be derived from a correlation between the motion data and the change of perspective on the object 250, as stated in more detail below.

The data processing circuitry 130, for example, determines a first patch 240-1 within the first image 210. As can be seen in Fig. 2, the first patch 240-1 may correspond to a box including a distinct target 252, such as a portion of a contour (e.g. a corner or an edge) of the object 250.

The first patch 240-1 may cover "unique" so-called "photo-differences" of the first image 210. If the images 210, 220 and 230 are monochrome, the photo-differences, for example, are indicative of a characteristic distribution of greyscale values (greyscale distribution) of pixels included in the first patch 240-1. Alternatively, the photo-differences can be understood of a distribution of color or contrast.

Subsequently, the data processing circuitry 130 can determine a second patch 240-2 indicative of the target 252 within the second image 220 by comparing the first patch 240-1 with the second image 220.

The first and the second patch 240-1 and 240-2, for example, are specified by their contour and by a position of their center within the first and the second image 210 and 220.

The data processing circuitry 130 may arrange the second patch 240-2 within the second image 220 such that the second patch 240-2 includes the photo-differences of the first patch 240-1 (within predetermined tolerances). This may ensure that the second patch 240-2 relates to the same target 252.

Due to a change of perspective, the second patch 240-2 may be shifted regarding to the first patch 240-1. A shift between the first and the second patch 240-1 and 240-2 may imply so-called "affine correspondences" defining a transition between the subsequent patches 240-1 and 240-2. Those may consider a rotation, a displacement, a warp and/or a shear of the patches 240-1 and 240-2.

As can be seen in Fig. 2, the second patch 240-2, for example, corresponds to a trapezoid/parallelogram.

The data processing circuitry 130 can deduce the change of perspective of the camera 120 from the affine correspondences between the first and the second patch 240-1 and 240-2. For example, the data processing circuitry 130 deduces the change of perspective, which, for example, is indicative of an angle, based on principles of homography.

The skilled person having benefit from the present disclosure will appreciate that the change of perspective may enable estimating a visually measurable pose of the camera 120 towards the target 252 in accordance with principles of visual odometry.

The visually measureable pose, for example, refers to a relative position or relative orientation of the camera 120 towards the target 252 with respect to other targets.

To obtain the (absolute) pose (e.g. indicative of coordinates or a measure of length) of the camera 120 towards the target 252, the data processing circuitry 130 can provide a scale to deduce an absolute value for the pose of the camera 120 from the visually measureable pose of the camera 120.

For this, the data processing circuitry 130 may associate the visual data with the motion data.

In some embodiments of the camera system 100, the data processing circuitry 130 determines the pose of the camera 120 using a Kalman filter, wherein a control vector of the Kalman filter is specified by the motion data and a measured state is defined by the relative pose derived from to the visual data.

A relation between the motion data and the visual data may provide an observation model of the Kalman filter. With the observation model, the relative pose of the camera 120 can be scaled to obtain the pose of the camera 120 as an absolute value, for example, indicative of coordinates and/or an angle.

Thus, the visual data and the motion data both may have an influence in determining the pose of the camera 120. Their influence may depend on a weighting factor indicative of an accuracy of the motion data and of the visual data, respectively to adapt the camera system 100 to different circumstances (e.g. a dark environment).

The above described concept for determining the pose of the camera 120 may also be referred to as "affine flow tracking".

Affine flow tracking may need the motion data and the sequence of images to be time-synchronized.

In some embodiments, the data processing circuitry can be configured to determine a third patch 240-3 indicative of the target 252 within a third image 230 following the second image 220 by comparing the first patch 240-1 with the third image 230. The data processing circuitry 130 can determine the third patch 240-3 analogously to the second patch 240-2 by reference to the first patch 240-1.

This may prevent the third patch 240-3 and subsequent patches from "drifting" away from the target 252 due to an error propagation and may provide subpixel accurate matching of subsequent patches with the target 252 for both temporal tracking and spatial mapping of subsequent patches by reference to subsequent images of the sequence of images.

Subsequently, the data processing circuitry 130 can determine the change of perspective from a shift/affine correspondences between the first and the third patch 240-1 and 240-3 to determine the pose of the camera 120.

Since the third patch 240-3 can be considered as being mapped onto the first patch 240-1 for determining the pose of the camera 120, this concept can be referred to as "affine flow mapping".

Additionally, the data processing circuitry 130 can determine a position of the target from the correlation between the change of perspective and the motion data.

For this, the pose of the camera 120 may be considered as an origin of a coordinate system. Consequently, the data processing circuitry 130 may determine the position of the target 252 within the coordinate system from the pose of the camera 120 towards the target 252.

The position of the target 252 within the coordinate system, for example, is indicative of 3-dimensional coordinates.

**In** some embodiments of the camera system 100, the data processing circuitry 130 is further configured to determine a velocity of the target 252 by tracking the position of the target 252.

For this, the data processing circuitry 130, for example, continuously determines the position of the target 252, as stated above, to derive its motion from temporal changes of the position. Implicitly, the data processing circuitry 130 can determine the velocity from the motion.

Further, the camera system 100 can determine whether the target 252 is static or moving within the environment by tracking the position of the target 252.

For example, the camera system 100 can analogously track positions of other targets surrounding the target 252 to ascertain whether the target 252 moves relative to the other targets.

If the position of the other targets does not change over time, those targets can be identified as static targets which do not move within the environment.

If the target 252 moves relative to one or more of the static targets, it can be identified as a moving target.

Alternatively, the data processing circuitry 130 can compare velocities of several targets to distinguish between static and moving targets.

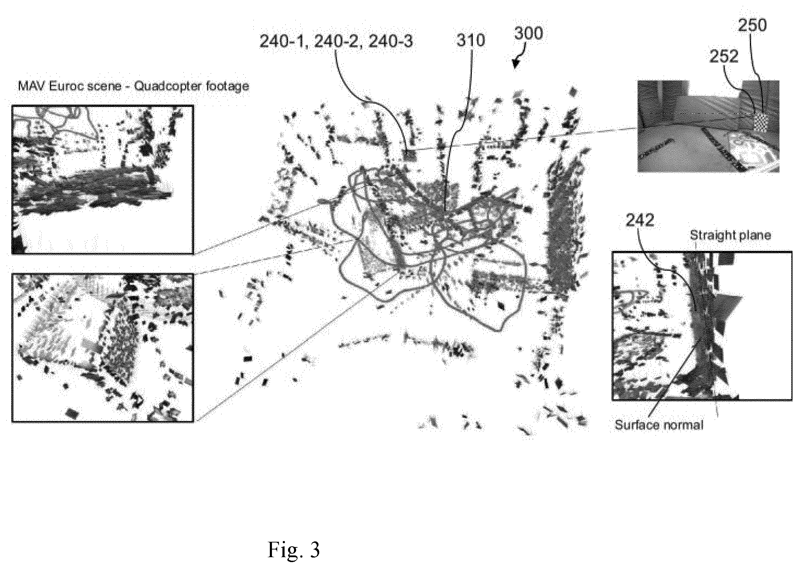

As illustrated by Fig. 3, the data processing circuitry 130 may register the position of the target 252 in a (3-dimensional) digital map 300 of the environment, for example, by mapping one or multiple of the patches 240-1, 240-2 and 240-3 onto the position of the target 252 within the digital map 300.

Thus, multiple targets can be continuously registered in the digital map 300 during a motion of the camera 120 along a motion path 310.

The patches 240-1, 240-2, 240-3 are further characterized by a surface normal 242. Consequently, the data processing circuitry 130 can characterize surfaces of the environment in terms of their orientation.

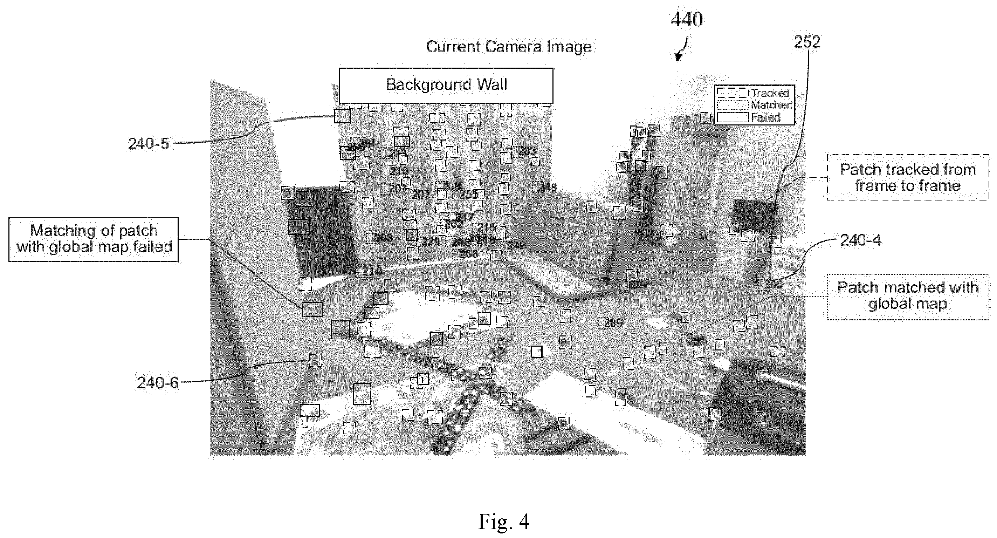

As can be seen in Fig. 4, the digital map 300 enables the data processing circuitry 130 to determine a fourth patch 240-4 indicative of the target 252 within a fourth image 440 based on the pose of the camera 120 and the digital map 300.

In some embodiments of the camera system 100, the data processing circuitry 130 is configured to compare the position of the target 252 with the pose of the camera 120 to predict a position of the target 252 within the fourth image 440. Consequently, the data processing circuitry 130 may align the fourth patch 240-4 with the predicted position.

Additionally, the data processing circuitry 130 can be configured to determine whether the fourth patch 240-4 matches with one or more of the preceding/registered patches 240-1, 240-2 and 240-3 and optionally determine a deviation from the preceding patches 240-1, 240-2 and 240-3.

The deviation, for example, enables a (auto-) re-calibration of the pose of the camera 120.

In some cases a patch 240-5 cannot be mapped to target and/or proper patches registered in the digital map 300. Consequently, such targets or patches can be ignored in connection with the characterization of the environment and/or discarded from the digital map 300.

During a motion of the camera 120, the data processing circuitry 130 can also continuously detect "new" targets to associate "new patches" 240-6 with those.

The digital map 300 can further be shared with a supplementary camera supporting visual odometry for a characterization of the environment. In general, a field of view from the supplementary camera can differ from a field of view of the camera 120.

Sharing the digital map 300 can enable the supplementary camera to associate another patch with the target 252 by reference to the digital map 300 and a pose of the supplementary camera to provide an auto-calibration between the camera 120 and the supplementary camera.

This, for example, can be desired in connection with a driver assistance system using multiple differently oriented cameras.

As mentioned above, in some applications can be a demand for using multiple cameras.

In camera systems with multiple cameras, the cameras can experience relative motion to each other or vibrations, for example, in connection with automotive applications. Consequently, a relative position of the multiple cameras can be subjected to variations which may cause calibration issues. Those calibration issues may lead to an insufficient characterization of the environment.

Hence, there is a demand for an improved concept for a characterization of an environment using multiple cameras to overcome such calibration issues emerging from variations of a relative position of the cameras towards each other.

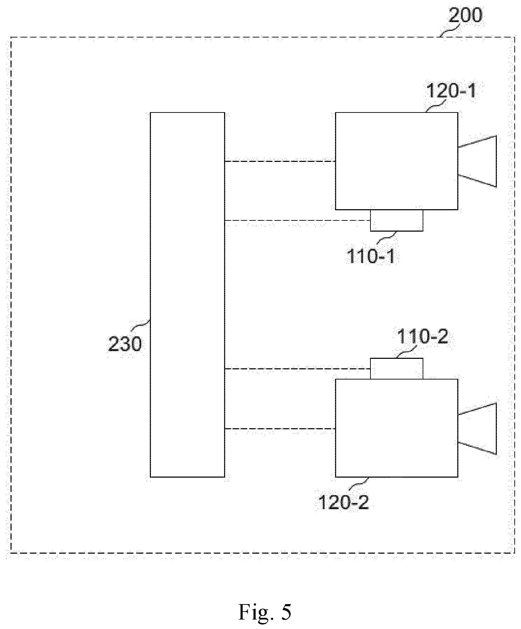

Fig. 5 illustrates a camera system 200, according to the invention, which comprises a first camera 120-1 and a first motion measurement unit 110-1 which is configured to provide first motion data of the first camera 120-1. Further, the camera system 200 comprises at least one second camera 120-2 and a second motion measurement unit 120-2 configured to provide second motion data of the second camera 120-2. Additionally, the camera system 200 comprises a data processing circuitry 230 configured to determine a relative pose of the first camera 120-1 and the second camera 120-2 towards each other from a correlation between the first motion data and the second motion data.

For this, the first and the second motion measurement unit 110-1 and 110-2 are coupled to the data processing circuitry 230.

In some embodiments, the data processing circuitry 230 may comprise a first and a second processing circuitry (not shown) each mounted to the first and the second camera 120-1 and 120-2. This may be desired if the first and the second camera 120-1 and 120-2 are mounted to separate mobile devices.

In some embodiments, the data processing circuitry 230 may correspond to the data processing circuitry 130 described in connection with the camera system 100.

The relative position of the first and the second camera 120-1 and 120-2 may relate to a relative motion of the cameras 120-1 and 120-2. Ipso facto, the relative position can be derived from the first and the second motion data indicative of the relative motion.

The first and/or the second motion data are, for example, indicative of an angular velocity and/or accelerations acting on the cameras 120-1 and 120-2.

The data processing circuitry 230, for example, determines the relative position of the cameras 120-1 and 120-2 from differences between the first and the second motion data.

In this way, the data processing circuitry 230 enables an auto-calibration of the camera system 200 with reference to the relative position of the cameras 120-1 and 120-2 to recover a spatial accuracy of the camera system 200.

In the camera system 200, the first camera 120-1 is configured to provide a first sequence of images of an environment and the second camera 120-2 is configured to provide a second sequence of images of the environment. In some those embodiments the data processing circuitry 230 can be further configured to determine the relative pose of the first camera 120-1 and the second camera 120-2 towards each other from a correlation between the first motion data, the second motion data, the first sequence of images and the second sequence of images.

For this, the first and the second motion data and the first and the second sequence of images may be time-synchronized.

To communicate the first and the second sequence of images to the data processing circuitry 230, each of the cameras 120-1 and 120-2 may be coupled with the data processing circuitry 230.

The data processing circuitry 230 may apply concepts of visual odometry to the first and the second sequence of images as described in connection with the aforementioned embodiments of the camera system 100.

For example, the data processing circuitry 230 utilizes a Kalman filter to determine the relative pose of the cameras 120-1 and 120-2.

An observation model of the Kalman filter can be derived from the correlation of affine correspondences between images of the first and the second sequence of images and a difference between the first and the second motion data.

A control vector of the Kalman filter may be specified by the first and the second motion data, whereas a measured state of the relative pose of the cameras 120-1 and 120-2 may be indicative of the affine correspondences.

This may enable the Kalman filter to continuously determine the relative pose of the first and the second camera 120-1 and 120-2 by reference to the first and the second motion data and the first and the second sequence of images.

In this way, the camera system 200 may increase an accuracy of the relative position compared to aforementioned embodiments of the camera system 200 using (only) the motion data for determining the relative position of the cameras 120-1 and 120-2.

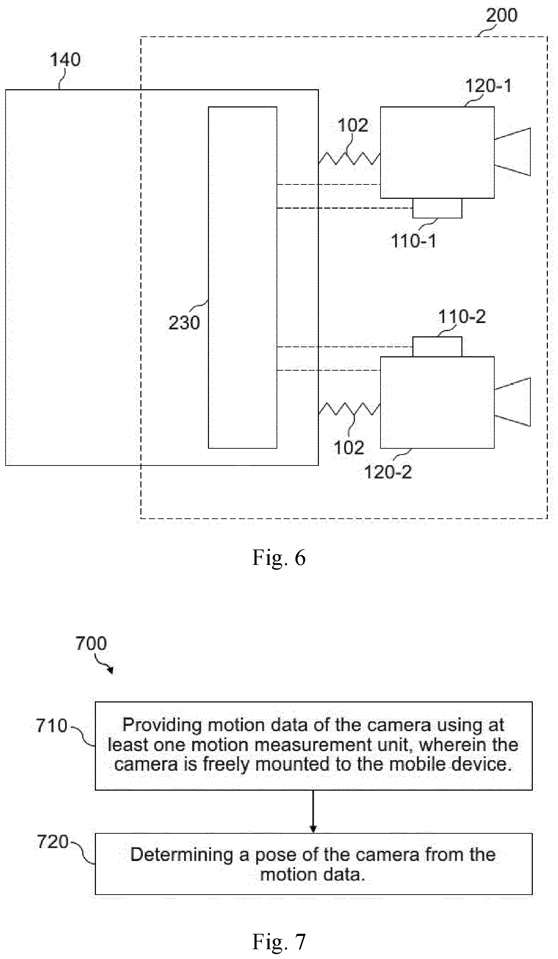

As can be seen in Fig. 6, the first and the second camera are freely mounted (mounted in floating position) to the mobile device 140. For this, each of the cameras 120-1 and 120-2 can be coupled to the mobile device 140 using the stabilizing mounting 102.

In this manner, perturbations (e.g. vibrations and/or torsion) coming from the mobile device may be attenuated to improve a spatial accuracy of the first camera 120-1 and/or the second camera 120-2.

In some embodiments, the first camera 120-1 is mounted to a first mobile device (not shown) and the second camera 120-2 is mounted to a second mobile device (not shown). Each of the first and the second mobile device, for example, is an unmanned aerial vehicle (UAV). Since the UAVs may move relative to each other, the relative pose of the cameras 120-1 and 120-2 may change.

With an aforementioned concept for determining the relative pose of the first and the second camera 120-1 and 120-2, the camera system 200 may be enabled to (continuously) auto-calibrate the camera system 200 with regard to the relative pose.

The data processing circuitry 230 is further configured to determine a position of a target within the environment from a correlation between the first sequence of images and the first motion data. Further, the data processing circuitry 230 is configured to register the position of the target in a digital map of the environment and detect the target within the second sequence of images using the digital map, the motion data and the relative pose of the first and the second camera 120-1 and 120-2.

This can be desired, for example, if the first and the second camera 120-1 and 120-2 are mounted to different mobile devices or have opposite fields of view like in case of some driving assistance systems.

The data processing circuitry 230, for example, determines the position of the target using the first sequence of images and the first motion data and may register the position of the target in a 3-dimensional map 300 as described in connection with the camera system 100. By reference to the relative pose of the first and the second camera 120-1 and 120-2, the motion data and the digital map, the data processing circuitry 230 can determine if the target is within the field of view of the second camera 120-2. Further, this may enable the data processing circuitry 230 to predict a position of the target within images of the second sequence of images with a deviation from a position of the target derived from the second sequence of images.

The skilled person having benefit from the present disclosure may appreciate that this deviation may be used for an auto-calibration of the first and the second camera 120-1 and 120-2 such that the auto-calibration causes the deviation to decrease.

Fig. 7 schematically illustrates a method 700 for localizing a camera of a camera system for a mobile device, not forming part of the invention defined in the claims. The method comprises providing 710 motion data of the camera using at least one motion measurement unit, wherein the camera is freely mounted to the mobile device. Further, the method comprises determining 720 a pose of the camera from the motion data.

The method 700 can be executed, for example, by the camera system 100. For this, at least a portion of the method 700 can be performed by the data processing circuitry 130 by executing an appropriate computer program.

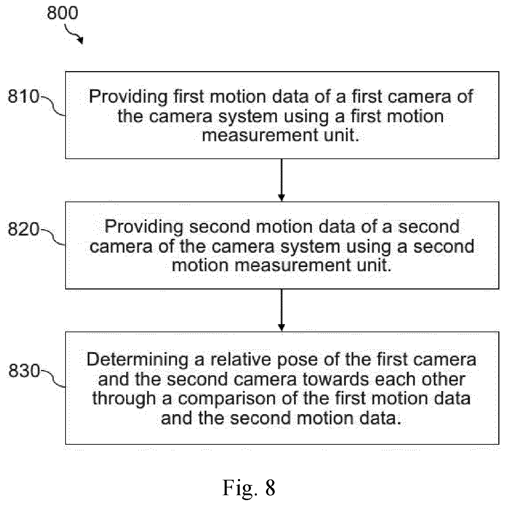

Fig. 8 schematically illustrates method 800 for localizing multiple cameras of a camera system for a mobile device, not forming part of the invention defined in the claims. The method 800 comprises providing 810 first motion data of a first camera of the camera system using a first motion measurement unit. The method 800 further comprises providing 820 second motion data of at least one second camera of the camera system using a second motion measurement unit. Moreover, the method 800 provides for determining 830 a relative pose of the first camera and the second camera towards each other through a comparison of the first motion data and the second motion data.

The method 800 can be executed, for example, by the camera system 200. For this, at least a portion of the method 800 can be performed by the data processing circuitry 230 by executing an appropriate computer program.

Examples may further be or relate to a computer program having a program code for performing one or more of the above methods, when the computer program is executed on a computer or processor. Steps, operations or processes of various above-described methods may be performed by programmed computers or processors. Examples may also cover program storage devices such as digital data storage media, which are machine, processor or computer readable and encode machine-executable, processor-executable or computer-executable programs of instructions. The instructions perform or cause performing some or all of the acts of the above-described methods. The program storage devices may comprise or be, for instance, digital memories, magnetic storage media such as magnetic disks and magnetic tapes, hard drives, or optically readable digital data storage media. Further examples may also cover computers, processors or control units programmed to perform the acts of the above-described methods or (field) programmable logic arrays ((F)PLAs) or (field) programmable gate arrays ((F)PGAs), programmed to perform the acts of the above-described methods.

The description and drawings merely illustrate the principles of the disclosure. Furthermore, all examples recited herein are principally intended expressly to be only for illustrative purposes to aid the reader in understanding the principles of the disclosure and the concepts contributed by the inventor(s) to furthering the art. All statements herein reciting principles, aspects, and examples of the disclosure, as well as specific examples thereof, are intended to encompass equivalents thereof.

A functional block denoted as "means for ..." performing a certain function may refer to a circuit that is configured to perform a certain function. Hence, a "means for s.th." may be implemented as a "means configured to or suited for s.th.", such as a device or a circuit configured to or suited for the respective task.

Functions of various elements shown in the figures, including any functional blocks labeled as "means", "means for providing a signal", "means for generating a signal.", etc., may be implemented in the form of dedicated hardware, such as "a signal provider", "a signal processing unit", "a processor", "a controller", etc. as well as hardware capable of executing software in association with appropriate software. When provided by a processor, the functions may be provided by a single dedicated processor, by a single shared processor, or by a plurality of individual processors, some of which or all of which may be shared. However, the term "processor" or "controller" is by far not limited to hardware exclusively capable of executing software, but may include digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included.

A block diagram may, for instance, illustrate a high-level circuit diagram implementing the principles of the disclosure. Similarly, a flow chart, a flow diagram, a state transition diagram, a pseudo code, and the like may represent various processes, operations or steps, which may, for instance, be substantially represented in computer readable medium and so executed by a computer or processor, whether or not such computer or processor is explicitly shown. Methods disclosed in the specification or in the claims may be implemented by a device having means for performing each of the respective acts of these methods.

It is to be understood that the disclosure of multiple acts, processes, operations, steps or functions disclosed in the specification or claims may not be construed as to be within the specific order, unless explicitly or implicitly stated otherwise, for instance for technical reasons. Therefore, the disclosure of multiple acts or functions will not limit these to a particular order unless such acts or functions are not interchangeable for technical reasons. Furthermore, in some examples a single act, function, process, operation or step may include or may be broken into multiple sub-acts, -functions, -processes, -operations or -steps, respectively. Such sub acts may be included and part of the disclosure of this single act unless explicitly excluded and as long as they are convered by the appended claims.

## Claims

1. A camera system (100; 200), comprising:
a first camera (120-1) configured to provide a first sequence of images of an environment;
a first motion measurement unit (110-1) configured to provide first motion data of the first camera (120-1);
at least one second camera (120-2) configured to provide a second sequence of images of the environment;
a second motion measurement unit (110-2) configured to provide second motion data of the second camera (120-2); and
a data processing circuitry (130; 230) configured to
determine a relative pose of the first camera (120-1) and the second camera (120-2) towards each other from a correlation between the first motion data and the second motion data,
determine a position of a target within the environment from a correlation between the first sequence of images and the first motion data;
register the position of the target in a digital map (300) of the environment; and
detect the target within the second sequence of images using the digital map, the motion data, and the relative pose of the first and the second camera (120-1; 120-2) towards each other.

2. The camera system (100; 200) of claim 1,
wherein the data processing circuitry (130; 230) is further configured to determine a pose of the first camera (120-1) within the environment from a correlation between the first sequence of images and the first motion data.

3. The camera system (100; 200) of claim 2, wherein the data processing circuitry (130; 230) is further configured to
determine a change of perspective of the first camera (120-1; 120-2) by comparing a first image (210) of the first sequence of images with a second image (220) of the first sequence of images following the first image (210); and
determine the pose of the first camera (120-1; 120-2) within the environment from a correlation between the first motion data and the change of perspective.

4. The camera system (100; 200) of claim 3, wherein the data processing circuitry (130; 230) is further configured to
determine a first patch (240-1) within the first image (210), wherein the first patch (240-1) is indicative of the target (252) within the environment;
determine a second patch (240-2) indicative of the target (252) within the second image (220) by comparing the first patch (240-1) with the second image (220); and
determine the change of perspective from a shift between the first and the second patch (240-1; 240-2).

5. The camera system (100; 200) of claim 4, wherein the data processing circuitry (130; 230) is further configured to
determine a third patch (240-3) indicative of the target (252) within a third image (230) following the second image (220) by comparing the first patch (240-1) with the third image (230); and
determine the change of perspective of the first camera (120-1; 120-2) from a shift between the first and the third patch.

6. The camera system (100; 200) of claim 4, wherein the data processing circuitry (130; 230) is further configured to determine the position of the target (252) from the correlation between the change of perspective of the first camera (120-1; 120-2) and the first motion data.

7. The camera system (100; 200) of claim 6, wherein the data processing circuitry (130; 230) is further configured to determine a velocity of the target (252) by tracking the position of the target.

8. The camera system (100; 200) of claim 6, wherein the data processing circuitry (130; 230) is further configured to
determine a fourth patch (240-4) indicative of the target (252) within a fourth image (440) based on the pose of the first camera (120-1) and the digital map (300).

9. The camera system (100; 200) of claim 1, wherein the respective motion measurement unit (110) comprises an inertial measurement unit, IMU, which is rigidly mounted to the respective camera and configured to provide at least a portion of the respective motion data.

10. The camera system (100; 200) of claim 1, wherein at least one of the first and the second camera (120-1; 120-2) is freely mounted to a respective mobile device (140).

11. The camera system (100; 200) of claim 10, wherein the respective motion measurement unit (110-1; 110-2) comprises a global positioning system, GPS, sensor which is installed at the respective mobile device (140) and configured to provide at least a portion of the respective motion data.

12. The camera system (100; 200) of claim 10, wherein the respective camera (120-1; 120-2) is freely mounted to the respective mobile device (140) by a camera stabilizer.

13. The camera system (100; 200) of claim 10, wherein the respective camera (120-1; 120-2) is freely mounted to the respective mobile (140) device by an elastic mounting.

14. A method, comprising
providing a first sequence of images of an environment with a first camera (120-1);
providing first motion data of the first camera (120-1);
providing a second sequence of images of the environment with a second camera (120-2);
providing second motion data of the second camera (120-2); and
determining a relative pose of the first camera (120-1) and the second camera (120-2) towards each other from a correlation between the first motion data, the second motion data the first sequence of images, and the second sequence of images,
determining a position of a target within the environment from a correlation between the first sequence of images and the first motion data;
registering the position of the target in a digital map of the environment; and
detecting the target within the second sequence of images using the digital map, the motion data and the relative pose of the first and the second camera (120-1; 120-2).

## Patentansprüche

1. Kamerasystem (100, 200), umfassend:
eine erste Kamera (120-1), die konfiguriert ist, um eine erste Bildfolge einer Umgebung bereitzustellen;
eine erste Bewegungsmesseinheit (110-1), die konfiguriert ist, um erste Bewegungsdaten der ersten Kamera (120-1) bereitzustellen;
mindestens eine zweite Kamera (120-2), die konfiguriert ist, um eine zweite Bildfolge der Umgebung bereitzustellen;
eine zweite Bewegungsmesseinheit (110-2), die konfiguriert ist, um zweite Bewegungsdaten der zweiten Kamera (120-2) bereitzustellen; und
eine Datenverarbeitungsschaltlogik (130, 230), die konfiguriert ist zum:
Bestimmen einer relativen Lage der ersten Kamera (120-1) und der zweiten Kamera (120-2) zueinander aus einer Korrelation zwischen den ersten Bewegungsdaten und den zweiten Bewegungsdaten,
Bestimmen einer Position eines Ziels innerhalb der Umgebung aus einer Korrelation zwischen der ersten Bildfolge und den ersten Bewegungsdaten;
Registrieren der Position des Ziels in einer digitalen Karte (300) der Umgebung; und
Erkennen des Ziels innerhalb der zweiten Bildfolge unter Verwendung der digitalen Karte, der Bewegungsdaten und der relativen Lage der ersten und der zweiten Kamera (120-1; 120-2) zueinander.

2. Kamerasystem (100; 200) nach Anspruch 1, wobei die Datenverarbeitungsschaltung (130; 230) ferner konfiguriert ist, um eine Lage der ersten Kamera (120-1) innerhalb der Umgebung aus einer Korrelation zwischen der ersten Bildfolge und den ersten Bewegungsdaten zu bestimmen.

3. Kamerasystem (100; 200) nach Anspruch 2, wobei die Datenverarbeitungsschaltung (130; 230) ferner konfiguriert ist, um, einen Perspektivwechsel der ersten Kamera (120-1; 120-2) durch Vergleichen eines ersten Bildes (210) der ersten Bildfolge mit einem zweiten Bild (220) der ersten Bildfolge zu bestimmen, das auf das erste Bild (210) folgt; und
Bestimmen der Lage der ersten Kamera (120-1; 120-2) innerhalb der Umgebung aus einer Korrelation zwischen den ersten Bewegungsdaten und dem Perspektivwechsel.

4. Kamerasystem (100; 200) nach Anspruch 3, wobei die Datenverarbeitungsschaltlogik (130; 230) ferner konfiguriert ist zum:
Bestimmen eines ersten Ausschnitts (240-1) innerhalb des ersten Bildes (210), wobei der erste Ausschnitt (240-1) das Ziel (252) innerhalb der Umgebung anzeigt;
Bestimmen eines zweiten Ausschnitts (240-2), der das Ziel (252) innerhalb des zweiten Bildes (220) anzeigt, durch Vergleichen des ersten Ausschnitts (240-1) mit dem zweiten Bild (220); und
Bestimmen des Perspektivwechsels anhand einer Verschiebung zwischen dem ersten und dem zweiten Ausschnitt (240-1; 240-2).

5. Kamerasystem (100; 200) nach Anspruch 4, wobei die Datenverarbeitungsschaltlogik (130; 230) ferner konfiguriert ist zum:
Bestimmen eines dritten Ausschnitts (240-3), der das Ziel (252) anzeigt, innerhalb eines dritten Bildes (230), das auf das zweite Bild (220) folgt, durch Vergleichen des ersten Ausschnitts (240-1) mit dem dritten Bild (230); und
Bestimmen des Perspektivwechsels der ersten Kamera (120-1; 120-2) anhand einer Verschiebung zwischen dem ersten und dem dritten Ausschnitt.

6. Kamerasystem (100; 200) nach Anspruch 4, wobei die Datenverarbeitungsschaltung (130; 230) ferner konfiguriert ist, um die Position des Ziels (252) aus der Korrelation zwischen dem Perspektivwechsel der ersten Kamera (120-1; 120-2) und den ersten Bewegungsdaten zu bestimmen.

7. Kamerasystem (100; 200) nach Anspruch 6, wobei die Datenverarbeitungsschaltung (130; 230) ferner konfiguriert ist, um eine Geschwindigkeit des Ziels (252) durch Verfolgen der Position des Ziels zu bestimmen.

8. Kamerasystem (100; 200) nach Anspruch 6, wobei die Datenverarbeitungsschaltlogik (130; 230) ferner konfiguriert ist zum:
Bestimmen eines vierten Ausschnitts (240-4), der das Ziel (252) innerhalb eines vierten Bildes (440) anzeigt, basierend auf der Lage der ersten Kamera (120-1) und der digitalen Karte (300).

9. Kamerasystem (100; 200) nach Anspruch 1, wobei die jeweilige Bewegungsmesseinheit (110) eine Trägheitsmesseinheit, IMU, umfasst, die an der jeweiligen Kamera starr montiert ist und konfiguriert ist, um mindestens einen Teil der jeweiligen Bewegungsdaten bereitzustellen.

10. Kamerasystem (100; 200) nach Anspruch 1, wobei mindestens eine der ersten und der zweiten Kamera (120-1; 120-2) an einer jeweiligen mobilen Vorrichtung (140) frei montiert ist.

11. Kamerasystem (100; 200) nach Anspruch 10, wobei die jeweilige Bewegungsmesseinheit (110-1; 110-2) einen Global-Positioning-System-Sensor, GPS-Sensor, umfasst, der an der jeweiligen mobilen Vorrichtung (140) installiert und konfiguriert ist, um mindestens einen Anteil der jeweiligen Bewegungsdaten bereitzustellen.

12. Kamerasystem (100; 200) nach Anspruch 10, wobei die jeweilige Kamera (120-1; 120-2) durch einen Kamerastabilisator frei an der jeweiligen mobilen Vorrichtung (140) montiert ist.

13. Kamerasystem (100; 200) nach Anspruch 10, wobei die jeweilige Kamera (120-1; 120-2) durch eine elastische Montageeinrichtung an der jeweiligen mobilen Vorrichtung (140) frei montiert ist.

14. Verfahren, umfassend:
Bereitstellen einer ersten Bildfolge einer Umgebung mit einer ersten Kamera (120-1);
Bereitstellen erster Bewegungsdaten der ersten Kamera (120-1);
Bereitstellen einer zweiten Bildfolge der Umgebung mit einer zweiten Kamera (120-2);
Bereitstellen zweiter Bewegungsdaten der zweiten Kamera (120-2); und
Bestimmen einer relativen Lage der ersten Kamera (120-1) und der zweiten Kamera (120-2) zueinander aus einer Korrelation zwischen den ersten Bewegungsdaten, den zweiten Bewegungsdaten, der ersten Bildfolge und der zweiten Bildfolge,
Bestimmen einer Position eines Ziels innerhalb der Umgebung aus einer Korrelation zwischen der ersten Bildfolge und den ersten Bewegungsdaten;
Registrieren der Position des Ziels in einer digitalen Karte der Umgebung; und
Erkennen des Ziels innerhalb der zweiten Bildfolge unter Verwendung der digitalen Karte, der Bewegungsdaten und der relativen Lage der ersten und der zweiten Kamera (120-1; 120-2).

## Revendications

1. Système de caméra (100 ; 200), comprenant :
une première caméra (120-1) configurée pour fournir une première séquence d'images d'un environnement ;
une première unité de mesure de mouvement (110-1) configurée pour fournir des premières données de mouvement de la première caméra (120-1) ;
au moins une seconde caméra (120-2) configurée pour fournir une seconde séquence d'images de l'environnement ;
une seconde unité de mesure de mouvement (110-2) configurée pour fournir des secondes données de mouvement de la seconde caméra (120-2) ; et
un ensemble de circuits de traitement de données (130 ; 230) configuré pour
déterminer une pose relative de la première caméra (120-1) et de la seconde caméra (120-2) l'une par rapport à l'autre à partir d'une corrélation entre les premières données de mouvement et les secondes données de mouvement,
déterminer une position d'une cible dans l'environnement à partir d'une corrélation entre la première séquence d'images et les premières données de mouvement ;
enregistrer la position de la cible dans une carte numérique (300) de l'environnement ; et
détecter la cible dans la seconde séquence d'images à l'aide de la carte numérique, des données de mouvement, et de la pose relative de la première et de la seconde caméra (120-1 ; 120-2) l'une par rapport à l'autre.

2. Système de caméra (100 ; 200) selon la revendication 1, dans lequel l'ensemble de circuits de traitement de données (130 ; 230) est en outre configuré pour déterminer une pose de la première caméra (120-1) dans l'environnement à partir d'une corrélation entre la première séquence d'images et les premières données de mouvement.

3. Système de caméra (100 ; 200) selon la revendication 2, dans lequel l'ensemble de circuits de traitement de données (130 ; 230) est en outre configuré pour déterminer un changement de perspective de la première caméra (120-1 ; 120-2) en comparant une première image (210) de la première séquence d'images avec une deuxième image (220) de la première séquence d'images suivant la première image (210) ; et
déterminer la pose de la première caméra (120-1 ; 120-2) dans l'environnement à partir d'une corrélation entre les premières données de mouvement et le changement de perspective.

4. Système de caméra (100 ; 200) selon la revendication 3, dans lequel l'ensemble de circuits de traitement de données (130 ; 230) est en outre configuré pour
déterminer une première parcelle (240-1) dans la première image (210), dans lequel la première parcelle (240-1) indique la cible (252) dans l'environnement ;
déterminer une deuxième parcelle (240-2) indiquant la cible (252) dans la deuxième image (220) en comparant la première parcelle (240-1) avec la deuxième image (220) ; et
déterminer le changement de perspective à partir d'un décalage entre la première et la deuxième parcelle (240-1 ; 240-2).

5. Système de caméra (100 ; 200) selon la revendication 4, dans lequel l'ensemble de circuits de traitement de données (130 ; 230) est en outre configuré pour
déterminer une troisième parcelle (240-3) indiquant la cible (252) dans une troisième image (230) suivant la deuxième image (220) en comparant la première parcelle (240-1) avec la troisième image (230) ; et
déterminer le changement de perspective de la première caméra (120-1 ; 120-2) à partir d'un décalage entre la première et la troisième parcelle.

6. Système de caméra (100 ; 200) selon la revendication 4, dans lequel l'ensemble de circuits de traitement de données (130 ; 230) est en outre configuré pour déterminer la position de la cible (252) à partir de la corrélation entre le changement de perspective de la première caméra (120-1 ; 120-2) et les premières données de mouvement.

7. Système de caméra (100 ; 200) selon la revendication 6, dans lequel l'ensemble de circuits de traitement de données (130 ; 230) est en outre configuré pour déterminer une vitesse de la cible (252) en suivant la position de la cible.

8. Système de caméra (100 ; 200) selon la revendication 6, dans lequel l'ensemble de circuits de traitement de données (130 ; 230) est en outre configuré pour
déterminer une quatrième parcelle (240-4) indiquant la cible (252) dans une quatrième image (440) sur la base de la pose de la première caméra (120-1) et de la carte numérique (300).

9. Système de caméra (100 ; 200) selon la revendication 1, dans lequel l'unité de mesure de mouvement (110) comprend une unité de mesure inertielle, **IMU,** qui est montée de manière rigide sur la caméra respective et configurée pour fournir au moins une partie des données de mouvement respectives.

10. Système de caméra (100 ; 200) selon la revendication 1, dans lequel au moins l'une de la première et de la seconde caméra (120-1 ; 120-2) est montée librement sur un dispositif mobile (140) respectif.

11. Système de caméra (100 ; 200) selon la revendication 10, dans lequel l'unité de mesure de mouvement (110-1 ; 110-2) respective comprend un capteur de système de positionnement global, GPS, qui est installé sur le dispositif mobile (140) et configuré pour fournir au moins une partie des données de mouvement respectives.

12. Système de caméra (100 ; 200) selon la revendication 10, dans lequel la caméra (120-1 ; 120-2) respective est montée librement sur le dispositif mobile (140) respectif par un stabilisateur de caméra.

13. Système de caméra (100 ; 200) selon la revendication 10, dans lequel la caméra (120-1 ; 120-2) respective est montée librement sur le dispositif mobile (140) respectif par une fixation élastique.

14. Procédé, comprenant
la fourniture d'une première séquence d'images d'un environnement avec une première caméra (120-1) ;
la fourniture de premières données de mouvement de la première caméra (120-1) ;
la fourniture d'une seconde séquence d'images de l'environnement avec une seconde caméra (120-2) ;
la fourniture de secondes données de mouvement de la seconde caméra (120-2) ; et
la détermination d'une pose relative de la première caméra (120-1) et de la seconde caméra (120-2) l'une par rapport à l'autre à partir d'une corrélation entre les premières données de mouvement, les secondes données de mouvement, la première séquence d'images, et la seconde séquence d'images,
la détermination d'une position d'une cible dans l'environnement à partir d'une corrélation entre la première séquence d'images et les premières données de mouvement ;
l'enregistrement de la position de la cible dans une carte numérique de l'environnement ; et
la détection de la cible dans la seconde séquence d'images à l'aide de la carte numérique, des données de mouvement et de la pose relative de la première et de la seconde caméra (120-1 ; 120-2).
